(19) **Europäisches Patentamt**

**European Patent Office**

**Office européen des brevets**

(11) **EP 1 062 763 B1**

(12) **EUROPÄISCHE PATENTSCHRIFT**

(45) Veröffentlichungstag und Bekanntmachung des Hinweises auf die Patenterteilung:
**20.08.2003   Patentblatt 2003/34**

(21) Anmeldenummer: **99919098.6**

(22) Anmeldetag: **18.03.1999**

(51) Int Cl.⁷: **H04L 9/08**

(86) Internationale Anmeldenummer:
**PCT/DE99/00771**

(87) Internationale Veröffentlichungsnummer:
**WO 99/048240 (23.09.1999 Gazette 1999/38)**

(54) **SCHLÜSSELAUSTAUSCHVERFAHREN**

CODE EXCHANGE METHOD

PROCEDE D'ECHANGE DE CODES

(84) Benannte Vertragsstaaten:
**BE CH DE FR GB LI NL**

(30) Priorität: **18.03.1998   DE 19811833**

(43) Veröffentlichungstag der Anmeldung:
**27.12.2000   Patentblatt 2000/52**

(73) Patentinhaber: **Rohde & Schwarz SIT GmbH**
**12489 Berlin (DE)**

(72) Erfinder:
• **VON DER HEIDT, Guido**
**D-82152 Krailling (DE)**
• **SÖHNE, Peter**
**D-85244 Röhrmoos (DE)**
• **VELTEN, Joachim**
**D-35216 Biedenkopf (DE)**

(74) Vertreter: **Körfer, Thomas, Dipl.-Phys.**
**Mitscherlich & Partner,**
**Patent- und Rechtsanwälte,**
**Sonnenstrasse 33**
**80331 München (DE)**

(56) Entgegenhaltungen:
**EP-A- 0 739 105         US-A- 5 515 441**

**Beschreibung**

Die Erfindung betrifft ein Schlüsselaustauschverfahren unter Verwendung des Diffie-Hellman-Protokolls mit einer End-zu-End Authentifikation.

Verschlüsselungsverfahren und Schlüsselgeräte dienen dem Schutz der Vertraulichkeit von zu übertragenden Informationen. Hierbei werden Kryptoalgorithmen verwendet, bei denen auf der Sendeseite aus einer zu schützenden Nutzinformation, dem Klartext, unter Verwendung eines geheimzuhaltenden Schlüssels ein für Dritte nicht interpretierbarer Schlüsseltext, auch Kryptotext genannt, erzeugt wird. Der geheimzuhaltende Schlüssel wird als Sitzungsschlüssel bezeichnet. Auf der Empfangsseite wird, bei einem symmetrischen Verschlüsselungsverfahren, derselbe Sitzungsschlüssel benötigt, um aus dem Schlüsseltext den Klartext zurückzugewinnen.

Bei einer vertraulichen Kommunikation müssen beide Kommunikationspartner über denselben Sitzungsschlüssel verfügen, der keinem Unbefugten zugänglich sein darf. Um dies sicherzustellen, wird der Sitzungsschlüssel in der Regel zu oder vor Beginn der Kommunikation durch Überschlüsselung mit einem Schlüssel höherer Hierarchie oder durch ein spezielles Schlüsseleinigungsprotokoll ausgetauscht. Ein derartiges Protokoll ist aus US-A-5 515 441 bekannt.

Bei Verwendung von Überschlüsselungsschlüsseln, seien es symmetrische Verfahren oder moderne asymmetrische Verfahren wie beispielsweise das RSA-Verfahren, muß der geheime Schlüssel auf Dauer im Verschlüsselungsgerät gespeichert werden. Wenn das Gerät in die Hände eines Angreifers fällt, so kann dieser den geheimen Schlüssel auslesen und damit zuvor aufgezeichnete Informationen, das heißt Schlüsseltexte, nachträglich entschlüsseln. Um dies zu verhindern wird häufig ein erheblicher technischer Aufwand betrieben, um das Auslesen von Schlüsseln aus einem Schlüsselgerät zu erschweren, beziehungsweise unmöglich zu machen (tamper-proof-devices).

Bei Schlüsselaustauschprotokollen nach Art des Diffie-Hellman-Verfahrens (W. Diffie, M.E. Hellman, New Directions in Cryptography, IEEE Transactions on Information Theory 6, 1976, Seiten 644 ist 654) ist hingegen keine derartige Schlüsselspeicherung notwendig. Bei diesem Verfahren wird mit Hilfe sogenannter Einwegfunktionen ein symmetrischer Kommunikationsschlüssel zwischen den Teilnehmern vereinbart.

Unter einer Einwegfunktion versteht man eine umkehrbare Funktion F von einer Menge X in einer Menge Y, so daß y = F(x) für alle x aus X "leicht", die Umkehrung $F^{-1}(y)$ jedoch "schwierig" zu berechnen ist. Kennt man die zu einer Chiffrierabbildung gehörige Dechiffrierabbildung nicht, so sollte die Verschlüsselungsfunktion eines jeden Kryptosystems wie eine Einwegfunktion erscheinen. Das Schlüsselaustauschverfahren von Diffie und Hellman basiert auf einer speziellen Klasse von Einwegfunktionen, die eine besondere Kommutativeigenschaft aufweisen.

Allgemeine Hinweise zur Kryptographie sind in dem Buch von W. Fumie und H.W. Ries, Kryptographie, Entwurf und Analyse symmetrischer Kryptosysteme, erschienen im R. Oldenburg Verlag München, Wien 1988, ISB 3-486-20868-3 enthalten.

Bei einem Schlüsselaustauschverfahren gemäß Diffie Hellman, gibt es, im Gegensatz zum Überschlüsselungsprinzip, keine gesicherte kryptographische Information über den Kommunikationspartner, mit dem die Verbindung aufgebaut wird. Damit werden sogenannte Man-in-the-middle-Attacken möglich, bei denen der Angreifer jedem der Kommunikationspartner gegenüber vorgibt, der jeweils andere zu sein, und somit die Informationen mitlesen kann.

Der Erfindung liegt die Aufgabe zugrunde ein Verschlüsselungsverfahren für Nachrichten anzugeben, bei dem die teilnehmenden Partner authentifizierbar und die Nachrichten gegen nachträgliche Entschlüsselung geschützt sind.

Diese Aufgabe wird erfindungsgemäß durch die im Patentanspruch angegebenen Merkmale gelöst.

Ein Vorteil des erfindungsgemäßen Verschlüsselungsverfahrens liegt in dem vergleichsweise geringen Rechenaufwand, da nur eine vergleichsweise geringe Anzahl von Exponentiationen benötigte wird.

Im folgenden wird die Erfindung anhand eines Ausführungsbeispieles beschrieben.

Die Grundidee der Erfindung liegt in der Kombination des Diffie-Hellman-Verfahrens und einem Public-Key-Verschlüsselungsverfahren. Diese Kombination stellt ein deutlich weniger aufwendiges Schlüsselaustauschprotokoll dar, als eine Kombination des klassischen Diffie-Hellman-Protokolls mit Signaturprotokollen.

Grundlage des erfindungsgemäßen Verschlüsselungsverfahrens sind analog zum Diffie-Hellman-Verfahren eine große Primzahl p und ein erzeugendes Element g der Gruppe der teilerfremden Restklassen mod p. Analog zum RSA-Verfahren besitzt jeder der Kommunikationspartner A und B einen individuellen geheimen Schlüssel $S_A$ und $S_B$. Für die geheimen Schlüssel S gilt:

S      (1≤S<p-1, ggT(S,p-1) = 1)
$S^{-1}$ sei das Inverse von S mod p-1, d.h. S $S^{-1}$ = 1 mod (p-1)

Weiter besitzt jeder der Kommunikationspartner A und B einen individuellen öffentlichen Schlüssel $P_A$ und $P_B$. Für die öffentlichen Schlüssel P gilt:

$$P = g^s \, mod \, p$$

Bei einer Variante der Erfindung gilt für den öffentlichen Schlüssel P:

$$P = g^{s^{-1}} \bmod p$$

Bei zwei weiteren Varianten der Erfindung wird eine beliebige Gruppe G mit erzeugendem Element g zugrunde gelegt, und der öffentliche Schlüssel P gemäß folgender Rechenvorschrift berechnet:

$$P = g^{S} \text{ beziehungsweise } P = g^{S^{-1}}$$

Es wird davon ausgegangen, daß der Kommunikationspartner A über den öffentlichen Schlüssel $P_B$ des Kommunikationspartner B, und der Kommunikationspartner B über den öffentlichen Schlüssel $P_A$ des Kommunikationspartner A verfügt. Dies wird in der Regel durch Einbettung der öffentlichen Schlüssel P in Zertifikate einer vertrauenswürdigen Instanz und Austausch der Zertifikate zwischen den Kommunikationspartnern A, B vor dem Datenaustausch erreicht (siehe beispielsweise B. Schneier, Angewandte Kryptographie, Addison-Wesley 1996, S. 219ff).

Vor Komunikationsbeginn wählt der Teilnehmer A ein x als Zufailszahl und bildet einen Teilschlüssel $Ax = P_B^{x} \bmod p$ und schickt diesen dem Teilnehmer B. Der Teilnehmer B wählt ein y als Zufallszahl und bildet einen Teilschlüssel $By = P_A^{y} \bmod p$ und schickt diesen dem Teilnehmer A.

Der Teilnehmer A bildet einen Sitzungsschlüssel $g^{xy} \bmod p$ aus seiner Zufallszahl x und dem Teilschlüssel BY des Teilnehmers B.

$$g^{xy} = \left(P_A^{y}\right)^{xS_A^{-1}} \bmod p$$

Der Teilnehmer B bildet einen Sitzungsschlüssel $g^{yx}$ aus seiner Zufallszahl y und dem Teilschlüssel AX des Teilnehmers A.

$$g^{yx} = \left(P_B^{x}\right)^{yS_B^{-1}} \bmod p$$

Diese beiden Schlüssel $g^{xy} \bmod p$ und $g^{yx} \bmod p$ sind einander gleich und bilden den symmetrischen Sitzungsschlüssel für die aktuelle vertrauliche Kommunikation.

Durch die Verwendung der asymmetrischen Schlüsselpaare $S_A$, $P_A$ und $S_B$, $P_B$ für die Bildung des Sitzungsschlüssels $g^{yx} \bmod p$ wird wieder eine End-zu-End-Authentifikation der Teilnehmer A und B erreicht und eine Man-in-the-middle-Attacke unmöglich. Dabei kann aber selbst ein Angreifer, der beide Geräte in seine Gewalt bringt, durch Auslesen der (inversen) privaten Schlüssel $S_A^{-1}$ und $S_B^{-1}$ keine zuvor aufgezeichneten Nachrichten mitlesen, da zur Berechnung des Sitzungsschlüssels $g^{xy} \bmod p$ die Kenntnis von $xS_A^{-1}$ oder $yS_B^{-1}$

notwendig ist, und x und y wie im klassischen Diffie-Hellman-Protokoll zufällig gewählt wurden. Diese Zufallszahlen x beim Teilnehmer A und y beim Teilnehmer B werden im Gerät nicht gespeichert.

Durch Auslesen der privaten Schlüssels S beziehungsweise $S^{-1}$ sind lediglich zukünftige Kommunikationen dieses Gerätes durch eine Man-in-the-middle-Attacke kompromittierbar. Dazu muß es dem Angreifer aber gelingen, ein solches Gerät dem rechtmäßigen Benutzer nach Auslesen des Schlüssels wieder unterzuschieben. Die Benutzung eines entwendeten Gerätes kann in üblicher Weise durch Sperren des öffentlichen Schlüssels verhindert werden.

Bei obigem Protokoll sind wie im Diffie-Hellman-Protokoll auf beiden Seiten (parallel) zwei modulare Exponentiationen auszuführen. Damit wird das Ziel, das Diffie-Hellman-Protokoll mit einer End-zu-End-Authentifikation zu verknüpfen, ohne eine Erhöhung der Anzahl der benötigten zeitaufwendigen Exponentiationen erreicht. Die Kombination des Diffie-Hellman-Protokolls mit Signaturprotokollen (RSA, DSA, etc.) ist wesentlich aufwendiger und verlangt zusätzliche zeitaufwendige mathematische Operationen (mindestens eine modulare Exponentiation).

Das erfindungsgemäße Verfahren läßt sich analog mit beliebigen Gruppen durchführen, in denen das Diskrete-Logarithmen-Problem schwer zu lösen ist. Solche Gruppen sind beispielsweise die multiplikative Gruppe endliche Körper (nicht primer Ordnung) oder elliptische Kurven über endlichen Körpern.

Allgemein liegt dem erfindungsgemäßen Verfahren folgendes Protokoll zugrunde:

Es sei G eine Gruppe mit erzeugendem Element g wobei in G das Diskrete-Logarithmen-Problem greift. Bespiele für solche Gruppen sind die multiplikativen Gruppen endlicher Körper und elliptische Kurven beziehungsweise Untergruppen solcher Gruppen.

Für den geheimen Schlüssel S gilt:

  0< S < Anzahl Elemente von G = Q, ggT S, Q = 1
  $S^{-1}$ das Inverse von S mod Q.

Für den öffentlichen Schlüssel P gilt:

$$P = g^{S}$$

Die Berechnung des gemeinsamen Sitzungsschlüssels $g^{xy}$ erfolgt dann analog zu dem zuvor geschilderten Verfahren, wobei die Arithmetik der Gruppe G zugrunde liegt.

Die geschilderte Variante des Diffie-Hellman-Protokolls kann zum Austausch eines gemeinsamen Sitzungsschlüssel in beliebigen Kryptosystemen eingesetzt werden. Voraussetzung ist lediglich, daß beim Schlüsselaustausch ein Zwei-Wege-Protokoll möglich ist.

Die Erfindung beinhaltet eine End-zu-End-Authentifikation der Kommunikationspartner und löst das Problem der Speicherung geheimer Schlüssel in Kryptogeräten. Durch die geringe Anzahl an benötigten Exponentiationen ergibt sich ein entscheidender Vorteil bei allen Anwendungen, wie beispielsweise Sprachverschlüsselung, bei denen lange Verbindungsaufbauzeiten nicht tolerierbar sind. Für eine modulare Exponentiation sind bei einer Modullänge von 1024 Bit und den in typischer Weise in Verschlüsselungsgeräten eingesetzten Prozessoren als Richtwerte etwa 1 bis 1,5 Sekunden Ausführungszeit zu veranschlagen.

## Patentansprüche

1. Schlüsselaustauschverfahren bei dem Kommunikationspartner A, B jeweils einen geheimen S und einen öffentlichen Schlüssel P besitzen, bei dem der Kommunikationspartner A eine Zufallszahl x und der Kommunikationspartner B eine Zufallszahl y wählt, bei dem vom Kommunikationspartner A ein erster Teilschlüssel Ax und vom Kommunikationspartner B ein zweiter Teilschüssel By unter Verwendung des öffentlichen Schlüssels P des jeweiligen Partners B, A gebildet und zum jeweils anderen Kommunikationspartner B, A übertragen wird, und bei dem jeweils aus der eigenen Zufallszahl x, y und dem Teilschlüssel By, Ax des jeweiligen Kommunikationspartners B, A unter Verwendung des eigenen geheimen Schlüssels S ein Sitzungsschlüssel $g^{xy}$, $g^{yx}$ gebildet wird, wobei die Teilschlüssel Ax, By und die Sitzungsschlüssel $g^{xy}$, $g^{yx}$ analog dem Diffie-Hellman-Protokoll berechnet werden.

## Claims

1. Key exchange method, in which communication partners A, B each have a secret key S and a public key P, in which communication partner A chooses a random number x and communication partner B chooses a random number y, in which a first subkey Ax is formed by communication partner A and a second subkey By is formed by communication partner B using the public key P of the respective partner B, A, and is transmitted to the respective other communication partner B, A, and in which a session key $g^{xy}$, $g^{yx}$ is formed in each case from the individual random number x, y and the subkey By, Ax of the respective communication partner B, A using the individual secret key S, the subkeys Ax, By and the session keys $g^{xy}$, $g^{yx}$ being calculated analogously to the Diffie-Hellman protocol.

## Revendications

1. Procédé d'échange de codes dans lequel les partenaires de communication A et B possèdent respectivement un code secret S et un code public P, dans lequel le partenaire de communication A choisit un nombre aléatoire x et le partenaire de communication B un nombre aléatoire y, dans lequel le partenaire de communication A forme un premier code partiel Ax et le partenaire de communication B un second code partiel By en utilisant le code public P du partenaire respectif B, A et qui est transmis respectivement à l'autre partenaire de communication B, A, et dans lequel respectivement à partir du nombre aléatoire propre x, y et le code partiel By, Ax du partenaire de communication respectif B, A, en utilisant le code secret propre S, on forme un code de session $g^{xy}$, $g^{yx}$, les codes partiels Ax, By et les codes de session $g^{xy}$, $g^{yx}$ étant calculés de façon analogue au protocole de Diffie-Hellman.